Europäisches Patentamt

European Patent Office

Office européen des brevets

(11) Publication number: **0 293 012 B1**

(12) **EUROPEAN PATENT SPECIFICATION**

(45) Date of publication of patent specification: **18.09.91**    (51) Int. Cl.5: **G01M 3/02**, G01N 3/12, F16L 55/10

(21) Application number: **88108546.8**

(22) Date of filing: **27.05.88**

(54) **A fastener for closing and sealing an end of a pipe subjected to internal pressure.**

(30) Priority: **29.05.87 PL 265964**
**10.03.88 PL 271104**

(43) Date of publication of application:
**30.11.88 Bulletin 88/48**

(45) Publication of the grant of the patent:
**18.09.91 Bulletin 91/38**

(84) Designated Contracting States:
**AT BE CH DE FR GB IT LI NL SE**

(56) References cited:
**EP-A- 0 103 777**
**EP-A- 0 204 270**
**DE-A- 2 147 128**
**FR-A- 1 514 706**

(73) Proprietor: **Instytut Chemii Przemyslowej**
**ul. Rydygiera 8**
**PL-01-793 Warszawa(PL)**

(72) Inventor: **Friedrich, Pawel**
**ul. Gen.Zajaczka 17/31**
**PL-01-505 Warszawa(PL)**
Inventor: **Placzek, Wieslaw**
**ul. Kickiego 5/32**
**PL-04-373 Warszawa(PL)**
Inventor: **Mynarz, Leszek**
**ul. Batuty 1/108**
**PL-02-743 Warszawa(PL)**
Inventor: **Karpinski, Krzysztof**
**ul. Aleja Wyzwolenia 12/17**
**PL-00-570 Warszawa(PL)**
Inventor: **Gaszewski, Jerzy**
**ul. Szekspira 4/371**
**PL-01-913 Warszawa(PL)**

(74) Representative: **Finck, Dieter et al**
**Patentanwälte v. Füner, Ebbinghaus, Finck**
**Mariahilfplatz 2 & 3**
**W-8000 München 90(DE)**

## Description

The invention relates to a fastener for closing and sealing an end of a pipe subjected to internal pressure, comprising a cover and a clamping ring separably connected to each other, an elastic conical ring provided inside the clamping ring for being clamped on the pipe, a movable ring-shaped element positioned between said conical ring and said cover and having a conical surface cooperating with the conical surface of the elastic conical ring when said movable ring-shaped element is shifted towards the face of the pipe, an elastic packing positioned between said movable element and the front face of the pipe, an elastic packing dividing the space between the cover and the movable element into two zones, one of which is connected to an external water supply source, and the other to the interior of the pipe, the lower portion of said cover and the upper portion of said clamping ring being provided with radial cut-outs angularly displaced relative to each other such that the cover and the clamping ring are rapidly connectable and disconnectable.

The pipe, for example a plastic pipe, is subjected to internal pressure and tested in a suitable apparatus in which a pipe segment is filled with water and subsequently an increased pressure is established in the pipe, the amount of the pressure corresponding to the required stress in the wall of the pipe.

From PL-A-145005 (EP-A-0204270) there is known a hydraulically closed fastener composed of two main parts, namely a cover and a clamp. These two parts are screwed together and thus they enclose a space inside which there are placed a conical elastic sealing and a slidable element. When the fastener has been placed on the pipe end, then the conical ring is at the outside diameter of the pipe under test and the elastic sealing on its end face.

In the cover of the fastener there is located a valve for supplying water to the space between the cover and the movable element. In the cover there is a hole for introducing water to the interior of the pipe axially cut out.

The lower portion of the movable element has a conical surface which cooperates with the conical surface of the elastic ring.

When water has been supplied to the fastener and an increased pressure established in the pipe under test, then the movable element slides in the direction of the end face of the pipe, thus clamping the elastic sealing and the elastic ring. Thus, the fastener becomes fastened on the pipe end, water is supplied into the pipe, an increased pressure is established in it and the relevant test of the internal pressure resistance of the pipe can be carried out.

With this fastener it is necessary to continuously supply its elements with water to keep the fastener clamped on the pipe during the whole duration of the test, which sometimes reaches 1,000 hours. Moreover, when disassembling the fastener it is often difficult to separate the cover from the clamp due to the seizure of the threads and to the expansion of the conical ring.

Another fastener for closing the ends of a pipe,known from SU-A-977968,has a cover screwed together with a clamp. Inside the clamp there is located a conical clamping ring whereas inside the cover there is a movable conical pin which slides under the action of pressure and seals the pipe end on its internal surface. This surface is bevelled. Against this bevelled surface edge the pin is pressed with its conical surface.

This fastener is suitable both for closing steel pipes and plastics pipes, but only for tests carried out at room temperature, under low pressures and during short periods of time. When these conditions are not met, the pipe material would be destroyed even under low loads applied to it.

A further fastener for closing and sealing pipes is described in US-A-3434337. In the frame of this fastener there are located several tens of parts, which have conical elements clamped with a flat element moving under the action of increased pressure from the medium supplied. This flat element has the shape of a disc with a hole which is situated axially on the pipe. Its movement causes a displacement of segments which with their conical surfaces act on the conical surfaces on the next segments and thus clamp them on the pipe. Sealing is realized here by means of a circular packing of the "U"-type situated with its open face to the supplied medium between the external surface of the pipe and internal surface of the sleeve.

This kind of attachment is very complex in its design, is composed of a large number of parts and has considerable dimensions and weight. It makes no separate fastener which can be fastened on the pipe end and placed together with the pipe section in the water tank of the test apparatus, but it makes an integral part of such apparatus.

It is the aim underlying the invention to create a fastener of the generic kind such that the drawbacks of the prior art designs are avoided and that no superfluous loads influence the pipe sections with regard to their deformation whereas a rapid and easy mounting and dismounting is possible.

This aim is obtained by a fastener of the generic kind wherein the space between the movable element and the clamping ring is also connected to said external water supply source, and wherein said movable element and said elastic ring have additional conical surfaces cooperating with each other when said movable element is shifted away from the front face of the pipe.

After clamping the fastener elements with a preliminary force deriving from the external supply and filling the pipe section with water, the function of maintaining the fastener elements in the clamped condition is taken over by the pressure of water filling the pipe. This means that it is sufficient to clamp the fastener elements preliminarily even with a small force and thereupon the force of clamping the fastener changes proportionally to the pressure of water filling the pipe, it means to the internal pressure under which the pipe is tested. Thus, any superfluous loads which negatively influence the pipe sections and deform excessively their ends, are avoided.

Rapid and easy is not only the operation of mounting the fastener on the pipe but also its dismounting and disassembling. To take away the fastener from the pipe it is enough after having finished the test to apply the water pressure to the space between the movable element and the clamp, thus displacing the movable element in the direction from the end face of the pipe and causing expansion of the elastic clamping-ring. Also the operation of connecting and disconnecting the two parts of the fastener, the cover and the clamp, is very easy due to the bayonet coupling design.

By means of drawings an embodiment of a fastener according to the present invention is explained.

Fig. 1      shows the fastener in an axial section and

Fig. 2      is the section A-A of Fig. 1.

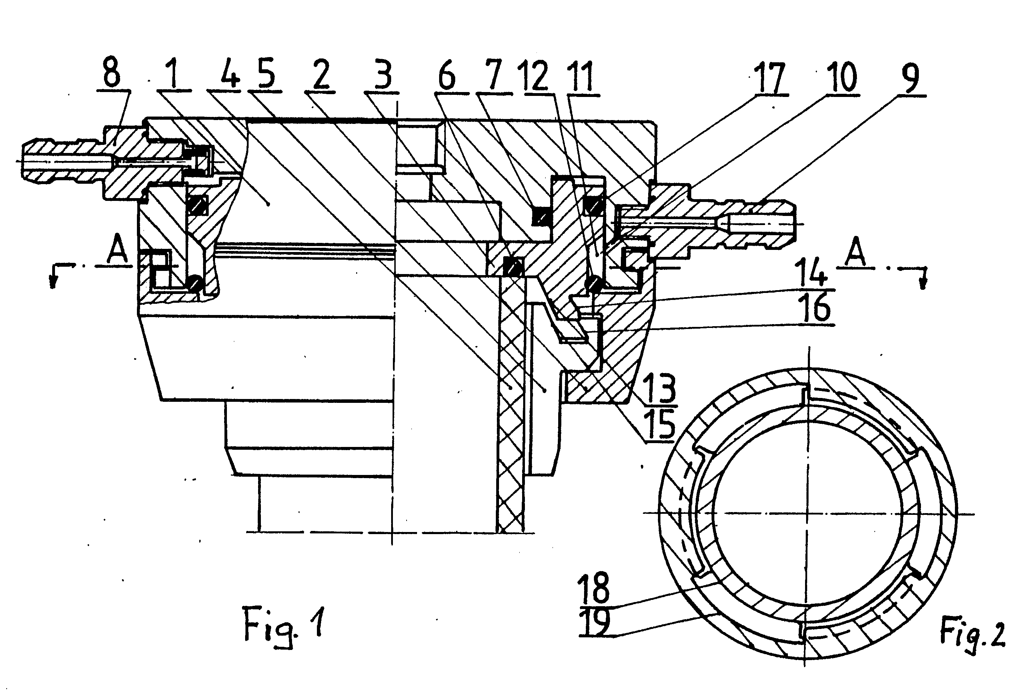

The fastener is composed of a cover 1 and a clamp 2 inside of which there is a movable element 3 in the shape of a ring. This element 3 is placed slideably in the cover 1. Inside the clamp 2 and on the external surface of the pipe 4 under test there is an elastic conical clamping ring 5. On the end face of the pipe 4 under test there is an elastic packing 6. The space between the movable element 3 and the cover 1 is subdivided by a packing 7 into two zones. One zone is connected with the internal space of the pipe 4 under test. The other zone is connected via a valve 8 with an external supply of the fastener with water. Further with this supply the space between the movable element 3 and the clamp 2 and the cover 1 is also connected via a valve 9 and a passage 10. This space is tightened with the packing 12. In the movable element 3 conical surfaces 13 and 14 and in the elastic ring 5 conical surfaces 15 and 16 are machined. The surfaces 13 and 15 cooperate with each other during the process of clamping the fastener on the pipe 4 whereas the surfaces 14 and 16 cooperate during dismounting the fastener from the pipe 4. On the surface of the movable contact of the element 3 with the cover 1 there is placed an elastic packing 17. In the cover 1 and in the clamp 2 cut-outs 18, 19 are made corresponding with each other, which cut-outs are in each part displaced one in relation to the other by a constant angular spacing.

## Claims

1. Fastener for closing and sealing an end of a pipe (4) subjected to internal pressure, comprising

   - a cover (1) and a clamping ring (2) separably connected to each other,
   - an elastic conical ring (5) provided inside the clamping ring (2) for being clamped on the pipe (4),
   - a movable ring-shaped element (3) positioned between said conical ring (5) and said cover (1) and having a conical surface cooperating with the conical surface of the elastic conical ring (5) when said movable ring-shaped element (3) is shifted towards the face of the pipe (4),
   - an elastic packing (6) positioned between said movable element (3) and the front face of the pipe (4), and
   - an elastic packing (7) dividing the space between the cover (1) and the movable element (3) into two zones, one of which is connected to an external water supply source, and the other to the interior of the pipe (4),
   - said cover (1) and said clamping ring (2) being connectable and disconnectable by a bayonet coupling,

   characterized in that also the space (11) between the movable element (3) and the clamping ring (2) is connected to said external water supply source, and in that said movable element (3) and said elastic ring (5) have additional conical surfaces (14, 16) cooperating with each other when said movable element (3) is shifted away from the front face of the pipe (4).

## Revendications

1. Dispositif de fixation destiné à fermer et rendre étanche l'extrémité d'un tuyau (4) soumis à une pression interne comprenant :

   - un couvercle (1) et une bague de serrage (2) reliés entre eux de manière séparable,
   - une bague conique élastique (5) disposée à l'intérieur de la bague de serrage (2) pour être serrée sur le tuyau (4),
   - un élément mobile (3) en forme de bague positionné entre ladite bague conique (5) et ledit couvercle (1) et comportant une surface conique coopérant avec la surface conique de la bague conique élastique (5) lorsque ledit élément mobile en forme de bague (3) est déplacé vers la face du tuyau (4),

- une garniture d'étanchéité élastique (6) positionnée entre ledit élément mobile (3) et la face frontale du tuyau (4), et
- une garniture d'étanchéité élastique (7) divisant l'espace entre le couvercle (1) et l'élément mobile (3) en deux zones, dont l'une est reliée à une source extérieure d'amenée d'eau et l'autre à l'intérieur du tuyau (4);
- ledit couvercle (1) et ladite bague de serrage (2) pouvant être connectés et déconnectés par un accouplement à baïonnette,

caractérisé en ce que l'espace (11) entre l'élément mobile (3) et la bague de serrage (2) est lui aussi connecté à ladite source extérieure d'alimentation en eau, et en ce que ledit élément mobile (3) et ladite bague élastique (5) comportent des surfaces coniques additionnelles (14, 16) coopérant l'une avec l'autre lorsque ledit élément mobile (3) est éloigné de la face frontale du tuyau (4).

## Patentansprüche

1. Befestigungselement zum Verschließen und Abdichten eines Endes eines mit Innendruck beaufschlagten Rohrs (4), mit
    - einer Abdeckung (1) und einem Klemmring (2), die trennbar miteinander verbunden sind,
    - einem elastischen konischen Ring (5), der in dem Klemmring (2) vorgesehen ist, um auf das Rohr (4) geklemmt zu werden,
    - einem beweglichen ringförmigen Element (3), das zwischen dem konischen Ring (5) und der Abdeckung (1) positioniert ist und eine konische Oberfläche hat, die mit der konischen Oberfläche des elastischen konischen Rings (5) zusammenwirkt, wenn das bewegliche ringförmige Element (3) zu der Seite des Rohrs (4) geschoben wird,
    - einer elastischen Abdichtung (6), die zwischen dem beweglichen Element (3) und der Stirnseite des Rohre (4) positioniert ist, und
    - einer elastischen Abdichtung (7), die den Raum zwischen der Abdeckung (1) und dem beweglichen Element (3) in zwei Zonen teilt, von denen eine mit einer externen Wasserzufuhrquelle und die andere mit dem Inneren des Rohrs (4) verbunden ist,
    - wobei die Abdeckung (1) und der Klemmring (2) durch eine Bajonettkupplung verbindbar und lösbar sind,

dadurch gekennzeichnet,
    - daß auch der Raum (11) zwischen dem beweglichen Element (3) und dem Klemmring (2) mit der externen Wasserzufuhrquelle verbunden ist und
    - daß das bewegliche Element (3) und der elastische Ring (5) zusätzliche konische Oberflächen (14, 16) haben, die miteinander zusammenwirken, wenn das bewegliche Element (3) von der Stirnseite des Rohrs (4) weggeschoben wird.

Fig. 1

Fig. 2

EP 0 293 012 B1